# EUROPEAN PATENT SPECIFICATION

(11) **EP 3 966 653 B1**
(45) Date of publication and mention of the grant of the patent: **01.01.2025**
(21) Application number: 19724391.8
(22) Date of filing: 09.05.2019
(51) Int. Cl.: A47L 9/28, A47L 11/40, G01S 17/04, G05D 1/00, G01S 7/481, G01S 17/931, G01S 17/08

(54) **DETECTING OBJECTS USING A LINE ARRAY**
DETEKTION VON OBJEKTEN UNTER VERWENDUNG EINES LINE-ARRAY
DÉTECTION D'OBJETS À L'AIDE D'UN RÉSEAU DE LIGNES

(43) Date of publication of application: 16.03.2022
(73) Proprietor: Aktiebolaget Electrolux, 105 45 Stockholm (SE)
(72) Inventor: FORSBERG, Petter, 105 45 Stockholm (SE)
(74) Representative: Electrolux Group Patents
(86) International application number: PCT/EP2019/061900
(87) International publication number: WO 2020/224782

(56) References cited:
- WO-A1-93/03399
- US-A- 4 248 532
- US-A1- 2017 332 853
- US-A1- 2018 014 709

## Description

### TECHNICAL FIELD

The invention relates to a robotic cleaning device and a method at the robotic cleaning device of detecting objects as the robotic cleaning device moves over a surface to be cleaned.

### BACKGROUND

In many fields of technology, it is desirable to use robots with an autonomous behaviour such that they freely can move around a space without colliding with possible obstacles.

Robotic vacuum cleaners are known in the art, which are equipped with drive means in the form of a motor for moving the cleaner across a surface to be cleaned. The robotic vacuum cleaners are further equipped with intelligence in the form of microprocessor(s) and navigation means for causing an autonomous behaviour such that the robotic vacuum cleaners freely can move around and clean a surface in the form of e.g. a floor. Thus, these prior art robotic vacuum cleaners have the capability of more or less autonomously moving across, and vacuum-cleaning, a room without colliding with obstacles located in the room, such as furniture, pets, walls, doors, etc.

Some prior art robotic vacuum cleaners use advanced 3D sensors such as time-of-flight (TOF) cameras for navigating the room and detecting obstacles. However, a general problem with 3D sensors is that they are expensive. WO 93/03399 discloses an obstacle detecting assembly including a narrow-beam light emitting diode (LED), a wide-beam LED and a light detector. The narrow-beam LED provides range, while the wide-beam LED provides wide coverage at closer range. The assemblies are located about the front of a vacuum cleaner robot and provide warning of obstacles in the robot' s path.

### SUMMARY

An object of the present invention is to solve, or at least mitigate, this problem in the art and to provide an alternative method of enabling a robotic cleaning device to navigate a surface to be cleaned.

This object is attained in a first aspect of the present invention by a robotic cleaning device configured to detect objects as it moves over a surface to be cleaned. The robotic cleaning device comprises a first light source configured to produce a close range wide light beam in front of the robotic cleaning device, a second light source configured to produce a long range horizontally narrow light beam in front of the robotic cleaning device, and an array sensor configured to detect light reflected from one or more of the light sources to detect illuminated objects from which said light is reflected.

This object is attained in a second aspect of the present invention by a method of a robotic cleaning device of detecting objects as it moves over a surface to be cleaned. The method comprises controlling a first light source to produce a close range wide light beam in front of the robotic cleaning device and detecting, on an array sensor, light reflected from the first light source in order to detect illuminated objects from which said light is reflected, and controlling a second light source to produce a long range horizontally narrow light beam in front of the robotic cleaning device and detecting, on an array sensor, light reflected from the second light source in order to detect illuminated objects from which said light is reflected.

In the robotic vacuum cleaner according to embodiments, the first light source, embodied for instance by a light-emitting diode (LED), being configured to produce a close range wide light beam in front of the robotic cleaning device is mainly utilized to detect any obstacles for avoiding collision.

The second light source, embodied for instance by a laser, is configured to produce a long range horizontally narrow light beam in front of the robotic cleaning device from which reflection detailed information may be obtained to be used for navigation utilizing for instance simultaneous localization and mapping (SLAM).

Advantageously, using the two light sources, it is possible to use a relatively low-resolution line array sensor but still enable object detection and navigation for the robotic cleaning device.

In an embodiment, the robotic cleaning device comprises a third light source configured to produce a close range horizontally narrow light beam towards a surface (e.g. a floor) in front of the robotic cleaning device. The third light source may be embodied in the form of a laser and is advantageously utilized to detect close range objects, such as e.g. furniture, but also an approaching wall or a ledge in the form of for instance a stairway to a lower floor (commonly referred to as "cliff detection").

In an embodiment, the robotic cleaning device comprises a controller configured to control the light sources to emit light, one light source at a time, and to compute time-of-flight of the light emitted from the respective light source and being reflected onto the array sensor, and to determine position of an object from which the light is reflected based on the computed time-of-flight and the position of the reflected light on the array sensor.

In an embodiment, the light sources are arranged to emit light with a horizontal radiation angle of 60-120°, more specified to 85-95°, even more specified to 90°.

In an embodiment, the first light source is arranged to emit light with a vertical radiation angle of 65-75°, more specified to 70°.

In an embodiment, the second light source is arranged to emit light with a vertical radiation angle of 0.1-1.5°, more specified to 1°.

In an embodiment, the third light source is arranged to emit light with a vertical radiation angle of 0.1-1.5°, more specified to 1°.

Preferred embodiment of the present invention will be described in the following.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figure 1a illustrates a side view of detection of objects on a surface over which a robotic cleaning device moves in accordance with an embodiment;
Figure 1b illustrates three top views of the robotic cleaning device of Figure 1a in accordance with an embodiment;
Figure 1c illustrates a further side view of the robotic cleaning device in accordance with an embodiment;
Figure 2 illustrates a front view of a robotic cleaning device in accordance with an embodiment;
Figure 3 illustrates a flowchart of the method of detecting objects according to an embodiment; and
Figure 4 illustrates a side view of a variant of detection of objects on a surface over which a robotic cleaning device moves.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

The invention relates to robotic cleaning devices, or in other words, to automatic, self-propelled machines for cleaning a surface, e.g. a robotic vacuum cleaner, a robotic sweeper or a robotic floor washer. The robotic cleaning device according to the invention can be mains-operated and have a cord, be battery-operated or use any other kind of suitable energy source, for example solar energy.

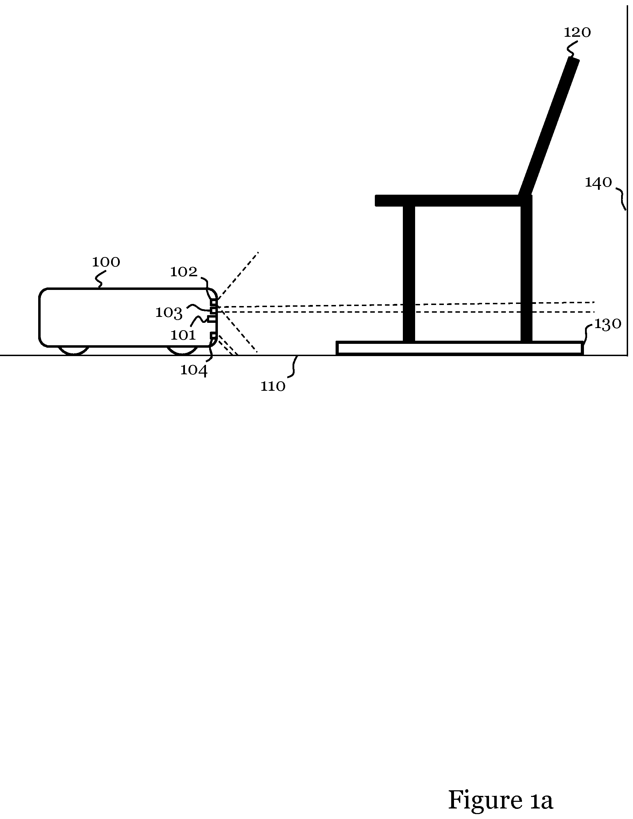

Figure 1a illustrates a side view of detection of objects on a surface over which a robotic cleaning device moves in accordance with an embodiment of the present invention.

Hence, the robotic cleaning device 100 moves over a floor 110 on which an obstacle in the form of a chair 120 is located on a rug 130 in front of a wall 140. The robotic cleaning device 100 must thus be able to detect the chair 120 and navigate around it to avoid collision, as well as the wall 140 and possibly be able to follow the wall 140 in order to clean the floor 110 effectively and for navigation. Further, it may be advantageous to also be able to detect the rug 130 in order to for instance control rotation speed of a brush roll (not shown) of the robot 100 in order avoid fibres of the rug 130 being entangled in the brush roll, or for cleaning along a periphery of the rug 130 or for determining that the rug 130 is to be cleaned at a later occasion e.g. after first having cleaned the floor. This is also useful for instance when traversing a threshold.

As previously has been discussed, prior art robotic cleaners exist where advanced 3D sensors are utilized in the form of e.g. TOF cameras equipped with an array of pixels having a size of, say 320 x 340 pixels. Such prior art robotic cleaning devices are typically equipped with a laser light source illuminating the surroundings of the robot, where the TOF camera detects light being reflected from encountered objects and thus determines their distance from the robot by measuring the round-trip time of the emitted laser light.

Thus, in addition to detecting the reflected light along a horizontal and a vertical direction of the array for each pixel, the TOF camera further derives depth information from the TOF measurements for each pixel to create a 3D representation of its surroundings. However, such cameras are expensive.

The robotic cleaning device 100 according to an embodiment is instead equipped with a far smaller sensor array, such as e.g. a line array sensor 101 with 1 x 30 pixels; i.e. a single-row array sensor. Such a line array sensor is far less expensive but will inevitably also provide less information about the surroundings.

It may be envisaged that a multi-line array sensor is used with for instance 2 x 30 pixels or even 3 x 30 pixels. Even smaller line array sensors may be used, such as for instance an array of 1 x 16 pixels.

For instance, if the line array is mounted horizontally, there will only be a single row of pixels, which greatly limits resolution in a vertical direction as compared to for instance an array comprising 320 x 340 pixels. However, as can be seen in Figure 1a, the robotic cleaning device 100 according to the embodiment is equipped with a plurality of light sources.

At an upper section of a front side of a main body of the robotic vacuum cleaner 100, a first light source 102 is arranged which is configured to produce a close range wide light beam in front of the robotic cleaning device 100. The first light source may be embodied for instance by a light-emitting diode (LED). The first light source is mainly utilized to detect any obstacles for avoiding collision.

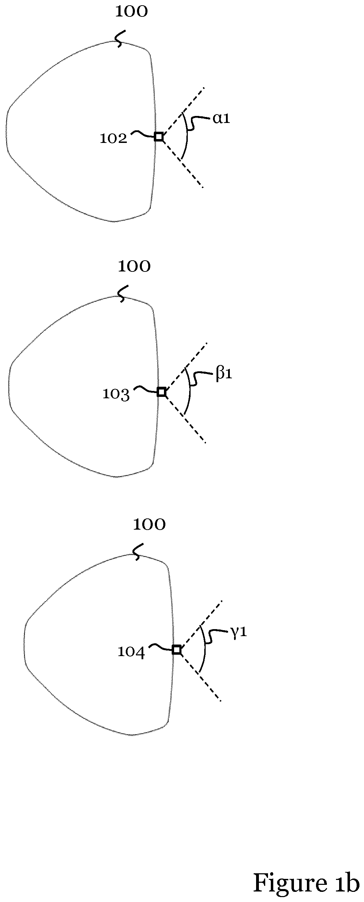

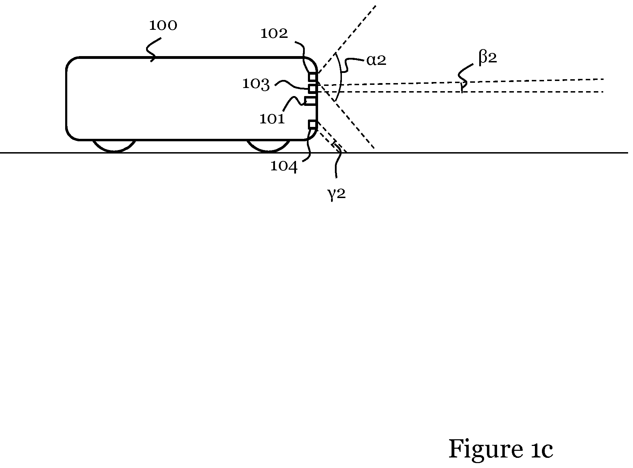

In an embodiment illustrated with reference to Figure 1b (showing three top views of the robotic vacuum cleaner 100 for illustrational purposes) and Figure 1c (showing a further side view of the robotic vacuum cleaner 100), a horizontal radiation angle α1 of the first light source 102 is in the range 60-120°, such as around 90° e.g. in the range 85-95°, while a vertical radiation angle α2 of the first light source 102 is around 70° e.g. in the range 65-75°.

Typically, the close range wide light beam produced by the first light source 102 will not result in any fine-grained information upon detection of the reflected light but will rather provide coarse-type information as to whether an object is present in front of the cleaner 100 or not.

Moreover, the robotic vacuum cleaner 100 is equipped with a second light source 103 configured to produce a long range horizontally narrow light beam in front of the robotic cleaning device 100. Hence, the second light source 103 will produce a "slice" of light extending in a horizontal plane but being vertically narrow. The second light source may be embodied for instance by a laser.

In an embodiment, a horizontal radiation angle β1 of the second light source 103 is in the range 60-120°, such as around 90° e.g. in the range 85-95°, while a vertical radiation angle β2 of the second light source 103 is around 1° e.g. in the range 0.1-1.5°.

The second light source 103 is typically mounted such that its beam is directed more or less straight forward from the perspective of the robot 100. The second light source 103 may be a laser emitting light from which reflection detailed information may be obtained to be used for navigation utilizing for instance simultaneous localization and mapping (SLAM). With the long range narrow second light source 103, details of any detected objects may be derived from the reflected light, which enables these reflections to be used for navigation.

Optionally, a third light source 104 is mounted at the front side of the main body, configured to produce a close range horizontally narrow light beam towards the floor 120 in front of the robotic cleaning device 100. The third light source 104 may be embodied in the form of a laser and is utilized to detect close range objects, such as e.g. furniture, but also an approaching wall or a ledge in the form of for instance a stairway to a lower floor (commonly referred to as "cliff detection"). Again, the information derived from these reflections is more detailed than that provided by means of the first light source 102.

In an embodiment, a horizontal radiation angle γ1 of the third light source 104 is in the range 60-120°, such as around 90° e.g. in the range 85-95°, while a vertical radiation angle γ2 of the third light source 104 is around 1° e.g. in the range 0.1-1.5°.

It is understood that one or more of the light sources may be equipped with optics to optically control the beams of the respective light source.

As previously discussed, the beam of each light source will reflect against any object in front of the robotic cleaning device 100 back towards the line array sensor 101, which is capable of detecting the reflected light along a horizontal and a vertical direction of the array to attain a 2D representation of the surroundings.

Further, by measuring the time-of-flight of the light beams being emitted by the respective light source, it is possible to determine the position of the object relative to the robotic cleaning device, thereby additionally attaining depth information providing for a 3D representation of the surroundings.

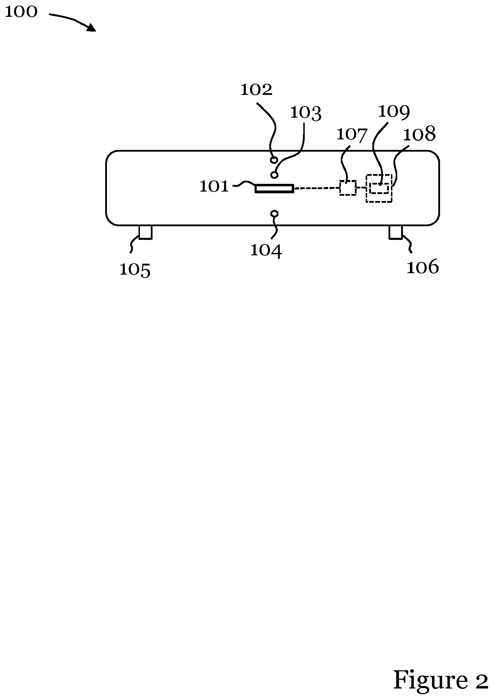

Figure 2 shows a front view of the robotic cleaning device 100 of Figures 1a-c in an embodiment of the present invention illustrating the previously mentioned line array sensor 101, the first light source 102, the second light source 103 and the third light source 104. In Figure 2, all three light sources are arranged along a vertical centre line of the sensor 101. However, many different locations may be envisaged for the light sources.

Further shown in Figure 2 are driving wheels 105, 106, a controller 107 such as a microprocessor controlling actions of the robotic cleaning device 100, such as its movement over the floor 120. The controller 107 is operatively coupled to the line array sensor 101 for recording images of a vicinity of the robotic cleaning device 100.

Further, the controller 107 is operatively coupled to the light sources 102, 103, 104 to control their emission of light and to compute time-of-flight of reflected beams onto the line array sensor 101. The controller 107 is thus capable of deriving positional data of encountered objects by analysing where the beams are reflected on the line array sensor 102 (i.e. x and y position) in combination with the computed time-of-flight (i.e. z position). Any operative data is typically stored in memory 108 along with a computer program 109 executed by the controller 107 to perform control of the robot 100 as defined by computer-executable instructions comprised in the computer program 109. It is noted that placement and angle of the light sources(s) with respect to the array sensor is taken into account when deriving said positional data.

Hence, the controller 107 controls the line array sensor 101 to capture and record images from which the controller 107 creates a representation or layout of the surroundings that the robotic cleaning device 100 is operating in, by extracting feature points from the images representing detected objects from which the emitted light beams are reflected and by measuring the distance from the robotic cleaning device 100 to these objects , while the robotic cleaning device 100 is moving across the surface to be cleaned. Thus, the controller derives positional data of the robotic cleaning device 100 with respect to the surface to be cleaned from the detected objects of the recorded images, generates a 3D representation of the surroundings from the derived positional data and controls driving motors to move the robotic cleaning device 100 across the surface to be cleaned in accordance with the generated 3D representation and navigation information supplied to the robotic cleaning device 100 such that the surface to be cleaned can be autonomously navigated by taking into account the generated 3D representation. Since the derived positional data will serve as a foundation for the navigation of the robotic cleaning device, it is important that the positioning is correct; the robotic device will otherwise navigate according to a "map" of its surroundings that is misleading.

The 3D representation generated from the images recorded by the line array sensor 101 and the controller 107 thus facilitates detection of obstacles in the form of walls, floor lamps, table legs, around which the robotic cleaning device must navigate as well as rugs, carpets, doorsteps, etc., that the robotic cleaning device 100 must traverse. The robotic cleaning device 100 is hence configured to learn about its environment or surroundings by operating/cleaning.

In an embodiment, the emitting of light of each light source 102, 103, 104 is controlled by the controller 107 such that the line array sensor 101 only detects reflected light from one of the three sensors at a time.

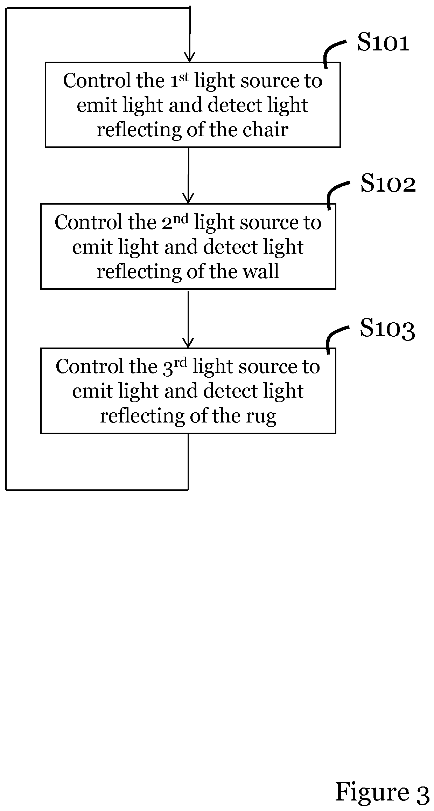

For instance, a method of detecting objects according to an embodiment is illustrated in the flowchart of Figure 3.

In this exemplifying embodiment, the controller 107 controls in step S101 the first light source 102 to emit a light beam and derives data representing the light beam of the first light source 102 being reflected against the chair 120 and back onto the line array sensor 101. This is performed for a time period of, say, 30 ms. Hence, the controller 107 thus concludes that there is in object located on a first computed distance from the robotic cleaning device 100, namely the chair 120.

Thereafter, in step S102, the controller 107 controls the second light source 103 to emit a light beam and derives data representing the light beam of the second light source 103 being reflected against the wall 140 and back onto the line array sensor 101. Again, this is performed for a time period of for instance 30 ms. Hence, the controller 107 thus concludes that there is in object in the form of the wall 140 located on a second computed distance from the robotic cleaning device 100.

Thereafter, in step S103, as the robotic cleaning device approaches the rug 140, the controller 107 controls the third light source 104 to emit a light beam and derives data representing the light beam of the third light source 104 being reflected against the rug 130 and back onto the line array sensor 101. Again, this is performed for a time period of e.g. 30 ms. Hence, the controller 107 thus concludes that there is in object in the form of the rug 130 located on a third computed distance from the robotic cleaning device 100.

Thereafter, the method may start over again at step S101 as the robotic cleaning device 100 moves over the floor 110.

Advantageously, using the two (or even three) light sources alternatingly for instance as described with reference to Figure 3, it is possible to use a relatively low-resolution line array sensor 101 but still enable object detection and navigation for the robotic cleaning device 100.

It is noted that the time periods may vary for the different light sources 102, 103, 104 and they are not necessarily controlled in the sequence described in Figure 3. For instance, upon approaching the rug 130, the third light source 104 is controlled to emit light for a relatively long time before any of the other two is controlled to emit light again since the detection of the rug 130 at that particular period in time is more important than detecting the wall 140.

With further reference to Figure 2, the controller/processing unit 107 embodied in the form of one or more microprocessors is arranged to execute a computer program 109 downloaded to a suitable storage medium 108 associated with the microprocessor, such as a Random-Access Memory (RAM), a Flash memory or a hard disk drive. The controller 107 is arranged to carry out a method according to embodiments of the present invention when the appropriate computer program 109 comprising computer-executable instructions is downloaded to the storage medium 108 and executed by the controller 107. The storage medium 108 may also be a computer program product comprising the computer program 109.

Alternatively, the computer program 109 may be transferred to the storage medium 108 by means of a suitable computer program product, such as a digital versatile disc (DVD), compact disc (CD) or a memory stick. As a further alternative, the computer program 109 may be downloaded to the storage medium 108 over a wired or wireless network. The controller 107 may alternatively be embodied in the form of a digital signal processor (DSP), an application specific integrated circuit (ASIC), a field-programmable gate array (FPGA), a complex programmable logic device (CPLD), etc.

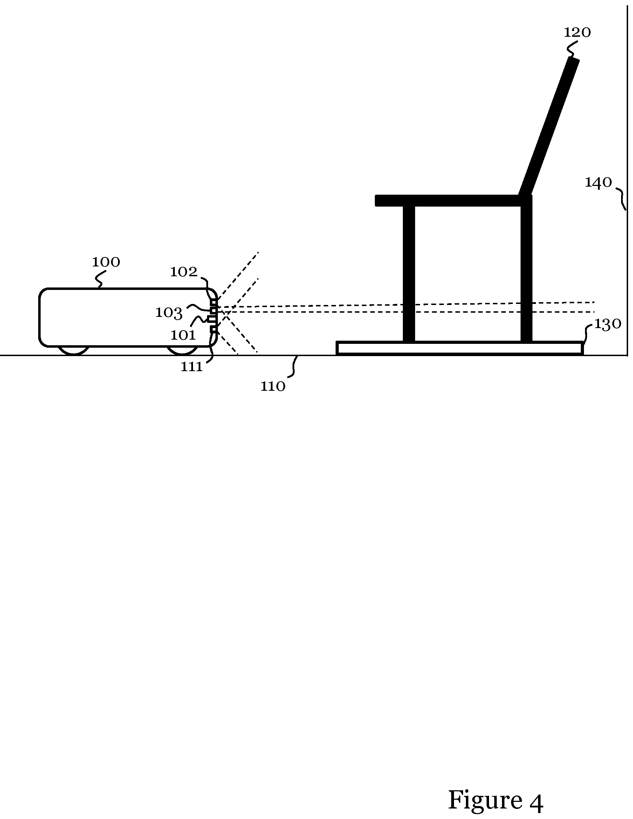

Figure 4 illustrates a variant of the robotic cleaning device 100 of Figures 1a-c, where a fourth light source 111, such as a LED, is utilized. The optional third light source 104 is not shown in Figure 4.

Similar to the first light source 102, the fourth light source 111 is configured to produce a close range wide light beam in front of the robotic cleaning device 100. A horizontal radiation angle of the fourth light source 111 may be in the range 60-120°, such as around 90° e.g. in the range 85-95°, while a vertical radiation angle of the fourth light source 111 may be around 70° e.g. in the range 65-75°.

The fourth light source 111 is arranged on the front side of the robotic cleaning device 100 such that the light emitted vertically (at least partially) overlaps with the light emitted from the first light source 102 to increase the vertical resolution. It is also possible to utilize intensity of a received signal to detect an object or to track an object over time.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. Robotic cleaning device (100) configured to detect objects as it moves over a surface to be cleaned, the robotic cleaning device (100) comprising:
a first light source (102) configured to produce a close range wide light beam in front of the robotic cleaning device (100);
a second light source (103) configured to produce a long range horizontally narrow light beam in front of the robotic cleaning device (100);
an array sensor (101) configured to detect light reflected from one or more of the light sources (102, 103) to detect illuminated objects from which said light is reflected; and
a controller (107) configured to control the light sources (102, 103) to emit light, one light source at a time, and to compute time-of-flight of the light emitted from the respective light source and being reflected onto the array sensor, and to determine position of an object from which the light is reflected based on the computed time-of-flight and the position of the reflected light on the array sensor (101).

2. The robotic cleaning device (100) of claim 1, further comprising:
a third light source (104) configured to produce a close range horizontally narrow light beam towards said surface in front of the robotic cleaning device (100).

3. The robotic cleaning device (100) of any one of the preceding claims, wherein the light sources (102, 103) are arranged to emit light with a horizontal radiation angle of 60-120°, more specified to 85-95°, even more specified to 90°.

4. The robotic cleaning device (100) of any one of the preceding claims, wherein the first light source (102) is arranged to emit light with a vertical radiation angle of 65-75°, more specified to 70°.

5. The robotic cleaning device (100) of any one of the preceding claims, wherein the second light source (103) is arranged to emit light with a vertical radiation angle of 0.1-1.5°, more specified to 1°.

6. The robotic cleaning device (100) of claim 2, wherein the third light source (104) is arranged to emit light with a vertical radiation angle of 0.1-1.5°, more specified to 1°.

7. The robotic cleaning device (100) of claim 2, wherein:
the first light source (102) comprises a light-emitting diode;
the second light source (103) comprises a laser; and
the third light source (104) comprises a laser.

8. The robotic cleaning device (100) of any one of the preceding claims, the array sensor (101) comprising a line array sensor.

9. A method of a robotic cleaning device (100) of detecting objects as it moves over a surface to be cleaned, the robotic cleaning device (100) comprising:
controlling (S101) a first light source (102) to produce a close range wide light beam in front of the robotic cleaning device (100) and detecting, on an array sensor (101), light reflected from the first light source (102) in order to detect illuminated objects from which said light is reflected;
controlling (S102) a second light source (103) to produce a long range horizontally narrow light beam in front of the robotic cleaning device (100) and detecting, on the array sensor (101), light reflected from the second light source (103) in order to detect illuminated objects from which said light is reflected; and
controlling the light sources (102, 103) to emit light, one light source at a time, and to compute time-of-flight of the light emitted from the respective light source and being reflected onto the array sensor, and to determine position of an object from which the light is reflected based on the computed time-of-flight and the position of the reflected light on the array sensor (101).

10. The method of claim 9, further comprising:
controlling (S103) a third light source (104) to produce a long range horizontally narrow light beam in front of the robotic cleaning device (100) and detecting, on an array sensor (101), light reflected from the third light source (104) in order to detect illuminated objects from which said light is reflected.

11. A computer program (125) comprising computer-executable instructions for causing a device (100) according to any one of claims 1-8 to perform the steps recited in any one of claims 9-10 when the computer-executable instructions are executed on a controller (116) included in the device (100).

12. A computer program product comprising a computer readable medium (126), the computer readable medium having the computer program (125) according to claim 11 embodied thereon.

## Patentansprüche

1. Roboterreinigungsvorrichtung (100), die konfiguriert ist, Gegenstände zu detektieren, während sie sich über eine zu reinigende Fläche bewegt, wobei die Roboterreinigungsvorrichtung (100) Folgendes umfasst:
eine erste Lichtquelle (102), die konfiguriert ist, einen breiten Lichtstrahl für den Nahbereich vor der Roboterreinigungsvorrichtung (100) zu erzeugen;
eine zweite Lichtquelle (103), die konfiguriert ist, einen horizontal schmalen Lichtstrahl für den Fernbereich vor der Roboterreinigungsvorrichtung (100) zu erzeugen;
einen Feldsensor (101), der konfiguriert ist, reflektiertes Licht von einer oder mehreren der Lichtquellen (102, 103) zu detektieren, um beleuchtete Gegenstände zu detektieren, von denen das Licht reflektiert wird; und
eine Steuereinheit (107), die konfiguriert ist, die Lichtquellen (102, 103) auf eine Weise zu steuern, dass sie eine Lichtquelle nach der anderen Licht emittieren, und eine Laufzeit des Lichts, das von der jeweiligen Lichtquelle emittiert wird und auf den Feldsensor reflektiert wird, zu berechnen und eine Position eines Gegenstands, von dem das Licht reflektiert wird, auf der Grundlage der berechneten Laufzeit und der Position des reflektierten Lichts auf dem Feldsensor (101) zu bestimmen.

2. Roboterreinigungsvorrichtung (100) nach Anspruch 1, die ferner Folgendes umfasst:
eine dritte Lichtquelle (104), die konfiguriert ist, einen horizontal schmalen Lichtstrahl für den Nahbereich in Richtung der Fläche vor der Roboterreinigungsvorrichtung (100) zu erzeugen.

3. Roboterreinigungsvorrichtung (100) nach einem der vorhergehenden Ansprüche, wobei die Lichtquellen (102, 103) ausgelegt sind, Licht mit einem horizontalen Strahlungswinkel im Bereich von 60°-120°, genauer im Bereich von 85°-95°, nochmals genauer von 90°, zu emittieren.

4. Roboterreinigungsvorrichtung (100) nach einem der vorhergehenden Ansprüche, wobei die erste Lichtquelle (102) ausgelegt ist, Licht mit einem vertikalen Strahlungswinkel im Bereich von 65°-75°, genauer von 70°, zu emittieren.

5. Roboterreinigungsvorrichtung (100) nach einem der vorhergehenden Ansprüche, wobei die zweite Lichtquelle (103) ausgelegt ist, Licht mit einem vertikalen Strahlungswinkel im Bereich von 0,1°-1,5°, genauer von 1°, zu emittieren.

6. Roboterreinigungsvorrichtung (100) nach Anspruch 2, wobei die dritte Lichtquelle (104) ausgelegt ist, Licht mit einem vertikalen Strahlungswinkel im Bereich von 0,1°-1,5°, genauer von 1°, zu emittieren.

7. Roboterreinigungsvorrichtung (100) nach Anspruch 2, wobei:
die erste Lichtquelle (102) eine Leuchtdiode umfasst;
die zweite Lichtquelle (103) einen Laser umfasst; und
die dritte Lichtquelle (104) einen Laser umfasst.

8. Roboterreinigungsvorrichtung (100) nach einem der vorhergehenden Ansprüche, wobei der Feldsensor (101) einen Reihenfeldsensor umfasst.

9. Verfahren einer Roboterreinigungsvorrichtung (100) zum Detektieren von Gegenständen, während sie sich über eine zu reinigende Fläche bewegt, wobei die Roboterreinigungsvorrichtung (100) Folgendes umfasst:
Steuern (S101) einer ersten Lichtquelle (102), einen breiten Lichtstrahl für den Nahbereich vor der Roboterreinigungsvorrichtung (100) zu erzeugen, und Detektieren von reflektiertem Licht von der ersten Lichtquelle (102) auf einem Feldsensor (101), um beleuchtete Gegenstände zu detektieren, von denen das Licht reflektiert wird;
Steuern (S102) einer zweiten Lichtquelle (103), einen horizontal schmalen Lichtstrahl für den Fernbereich vor der Roboterreinigungsvorrichtung (100) zu erzeugen, und Detektieren von reflektiertem Licht von der zweiten Lichtquelle (103) auf dem Feldsensor (101), um beleuchtete Gegenstände zu detektieren, von denen das Licht reflektiert wird; und
Steuern der Lichtquellen (102, 103) auf eine Weise, dass sie nacheinander Licht emittieren, und zum Berechnen einer Laufzeit des Lichts, das von der jeweiligen Lichtquelle emittiert wird und auf den Feldsensor reflektiert wird, und zum Bestimmen einer Position eines Gegenstands, von dem das Licht reflektiert wird, auf der Grundlage der berechneten Laufzeit und der Position des reflektierten Lichts auf dem Feldsensor (101).

10. Verfahren nach Anspruch 9, das ferner Folgendes umfasst:
Steuern (S103) einer dritten Lichtquelle (104), einen horizontal schmalen Lichtstrahl für den Fernbereich vor der Roboterreinigungsvorrichtung (100) zu erzeugen, und Detektieren von reflektiertem Licht von der dritten Lichtquelle (104) auf einem Feldsensor (101), um beleuchtete Gegenstände zu detektieren, von denen das Licht reflektiert wird.

11. Computerprogramm (125), das computer-ausführbare Anweisungen zum Bewirken, dass eine Vorrichtung (100) nach einem der Ansprüche 1-8 die Schritte nach einem der Ansprüche 9-10 durchführt, wenn die computerausführbaren Anweisungen auf einer Steuereinheit (116) ausgeführt werden, die in der Vorrichtung (100) enthalten ist, umfasst.

12. Computerprogrammprodukt, das ein computerlesbares Medium (126) umfasst, wobei auf dem computerlesbaren Medium das Computerprogramm (125) nach Anspruch 11 enthalten ist.

## Revendications

1. Dispositif de nettoyage robotique (100), configuré pour détecter des objets tandis qu'il se déplace sur une surface à nettoyer, le dispositif de nettoyage robotique (100) comprenant :
une première source lumineuse (102) configurée pour produire un large faisceau lumineux de courte portée devant le dispositif de nettoyage robotique (100) ;
une deuxième source lumineuse (103) configurée pour produire un faisceau lumineux horizontalement étroit de longue portée devant le dispositif de nettoyage robotique (100) ;
un capteur matriciel (101) configuré pour détecter la lumière réfléchie émanant d'une ou de plusieurs des sources lumineuses (102, 103) afin de détecter des objets éclairés desquels ladite lumière est réfléchie ; et
un contrôleur (107) configuré pour commander aux sources lumineuses (102, 103) d'émettre de la lumière, une source lumineuse à la fois, et pour calculer un temps de vol de la lumière émise par la source lumineuse respective et réfléchie sur le capteur matriciel, et pour déterminer la position d'un objet duquel la lumière est réfléchie sur la base du temps de vol calculé et de la position de la lumière réfléchie sur le capteur matriciel (101).

2. Dispositif de nettoyage robotique (100) selon la revendication 1, comprenant en outre :
une troisième source lumineuse (104) configurée pour produire un faisceau lumineux horizontalement étroit de courte portée vers ladite surface devant le dispositif de nettoyage robotique (100).

3. Dispositif de nettoyage robotique (100) selon l'une quelconque des revendications précédentes, les sources lumineuses (102, 103) étant agencées de manière à émettre de la lumière avec un angle de rayonnement horizontal de 60 à 120°, plus particulièrement de 85 à 95°, encore plus particulièrement de 90°.

4. Dispositif de nettoyage robotique (100) selon l'une quelconque des revendications précédentes, la première source lumineuse (102) étant agencée de manière à émettre de la lumière avec un angle de rayonnement vertical de 65 à 75°, plus particulièrement de 70°.

5. Dispositif de nettoyage robotique (100) selon l'une quelconque des revendications précédentes, la deuxième source lumineuse (103) étant agencée de manière à émettre de la lumière avec un angle de rayonnement vertical de 0,1 à 1,5°, plus particulièrement de 1°.

6. Dispositif de nettoyage robotique (100) selon la revendication 2, la troisième source lumineuse (104) étant agencée de manière à émettre de la lumière avec un angle de rayonnement vertical de 0,1 à 1,5°, plus particulièrement de 1°.

7. Dispositif de nettoyage robotique (100) selon la revendication 2,
la première source lumineuse (102) comprenant une diode électroluminescente ;
la deuxième source lumineuse (103) comprenant un laser ; et
la troisième source lumineuse (104) comprenant un laser.

8. Dispositif de nettoyage robotique (100) selon l'une quelconque des revendications précédentes, le capteur matriciel (101) comprenant un capteur matriciel linéaire.

9. Procédé de détection d'objets par un dispositif de nettoyage robotique (100) tandis qu'il se déplace sur une surface à nettoyer, le dispositif de nettoyage robotique (100) comprenant :
la commande (S101) à une première source lumineuse (102) de produire un large faisceau lumineux de courte portée devant le dispositif de nettoyage robotique (100) et la détection, sur un capteur matriciel (101), de la lumière réfléchie émanant de la première source lumineuse (102) dans le but de détecter des objets éclairés desquels ladite lumière est réfléchie ;
la commande (S102) à une deuxième source lumineuse (103) de produire un faisceau lumineux horizontalement étroit de longue portée devant le dispositif de nettoyage robotique (100) et la détection, sur le capteur matriciel (101), de la lumière réfléchie émanant de la deuxième source lumineuse (103) dans le but de détecter des objets éclairés desquels ladite lumière est réfléchie ; et
la commande aux sources lumineuses (102, 103) d'émettre de la lumière, une source lumineuse à la fois, et de calculer un temps de vol de la lumière émise par la source lumineuse respective et réfléchie sur le capteur matriciel, et de déterminer la position d'un objet duquel la lumière est réfléchie sur la base du temps de vol calculé et de la position de la lumière réfléchie sur le capteur matriciel (101).

10. Procédé selon la revendication **9,** comprenant en outre :
la commande (S103) à une troisième source lumineuse (104) de produire un faisceau lumineux horizontalement étroit de longue portée devant le dispositif de nettoyage robotique (100) et la détection, sur un capteur matriciel (101), de la lumière réfléchie émanant de la troisième source lumineuse (104) dans le but de détecter des objets éclairés desquels ladite lumière est réfléchie.

11. Programme informatique (125) comprenant des instructions exécutables par ordinateur pour amener un dispositif (100) selon l'une quelconque des revendications 1 à 8 à réaliser les étapes énoncées dans l'une quelconque des revendications 9 à 10 lorsque les instructions exécutables par ordinateur sont exécutées sur un contrôleur (116) contenu dans le dispositif (100).

12. Produit-programme informatique comprenant un support (126) lisible par ordinateur, le programme informatique (125) selon la revendication 11 étant matérialisé sur le support lisible par ordinateur.
